# EUROPÄISCHE PATENTSCHRIFT

(11) **EP 2 277 742 B1**
(45) Veröffentlichungstag und Bekanntmachung des Hinweises auf die Patenterteilung: **05.09.2012**
(21) Anmeldenummer: 10168914.9
(22) Anmeldetag: 08.07.2010
(51) Int. Cl.: B60R 9/04

(54) **Vorrichtung zur Befestigung eines Anbauteils, z. B. einer Reling, an einer Fahrzeugkarosserie**
Device for fixing a part, e.g. a rail, to the bodywork of a vehicle
Dispositif de fixation d'une pièce, par exemple d'une rambarde, sur une carrosserie de véhicule

(30) Priorität: 24.07.2009 DE 102009026245
(43) Veröffentlichungstag der Anmeldung: 26.01.2011
(73) Patentinhaber: JAC Products Europe GmbH, 42285 Wuppertal (DE)
(72) Erfinder: Rothstein, Reinhold, 42279, Wuppertal (DE); Böcker, Frank, 58089, Hagen (DE); Adamo, Filippo, 42289, Wuppertal (DE)
(74) Vertreter: Christophersen & Partner

(56) Entgegenhaltungen:
- EP-B1- 0 950 569
- DE-A1- 10 149 483
- DE-B3-102005 013 451
- DE-B3-102007 015 129

## Beschreibung

Die Erfindung betrifft eine Vorrichtung zur Befestigung eines sich von außen gegenüber dem Karosserieaußenblech einer Fahrzeugkarosserie abzustützenden Anbauteils, z. B. einer Reling, an einer im Bereich unterhalb des Karosserieaußenblechs verlaufenden Karosseriestruktur, wobei sich ein mit dem Anbauteil verbundener Zapfen durch eine Öffnung des Außenblechs hindurch erstreckt und durch von fahrzeuginnen her gegen die Karosseriestruktur abgestützte Zugmittel zu der Karosseriestruktur hin beaufschlagbar ist.

Da die Außenbleche von Fahrzeugkarosserien häufig zu dünnwandig sind, um eine hinreichende Stabilität für die Befestigung von Anbauteilen wie z. B. einer Reling zu bieten, erfolgt die Befestigung vor allem in solchen Karosseriebereichen, in denen unterhalb des Außenblechs verstärkende Karosseriestrukturen wie z. B. Rahmen, Dachflansche oder Spriegel angeordnet sind. Daher sitzen Anbauteile zwar außen auf dem Karosserieaußenblech auf, sie sind jedoch zugleich mit der unterhalb angeordneten, steifen Karosseriestruktur verbunden. Hinsichtlich des Abstandes zwischen Karosserieblech und der Struktur ist im Kfz-Bereich eine gewisse Toleranz möglich.

Daher sind zur Befestigung von Anbauteilen Konstruktionen bekannt, z. B. aus der EP 0 950 569 B1 und der DE 10 2005 013 451 B3, die zugleich eine sichere Verankerung an der Karosseriestruktur mit Längenausgleich, wie auch eine - zur Verhinderung einer Deformation des Außenblechs - nicht zu hohe Andrückkraft auf das Außenblech sicherstellen. Zur sicheren Befestigung des Anbauteils dient ein fest in dem Anbauteil verankerter Einsatz in Gestalt eines Zapfens, der sich durch die Montageöffnung des Außenblechs hindurchstecken lässt, und der anschließend durch verklemmbare Zugmittel von fahrzeuginnen her gegen die Karosseriestruktur verspannt wird. Zum Ausgleich der Toleranzen zwischen Außenblech und unterhalb angeordneter Karosseriestruktur weist das Zugmittel unter anderem eine in einer Bohrung des Zapfens dauerhaft verklemmbare Spreizhülse auf.

Die Vorrichtungen nach der EP 0 950 569 B1 und der DE 10 2005 013 451 B3 ermöglichen zwar eine sichere Befestigung einschließlich Toleranzausgleich, jedoch ergeben sich Schwierigkeiten bei der Montage, wenn das Anbauteil nicht von oben her auf einem Fahrzeugdach zu befestigen ist, sondern an anderen, nicht im Wesentlichen horizontalen Flächen einer Fahrzeugkarosserie. Denn nur bei einer im Wesentlichen horizontalen Karosseriefläche führt infolge des Eigengewichts der Teile bereits das einfache Aufsetzen des Anbauteils zu einer ausreichenden Vorpositionierung. An anders ausgerichteten Karosserieflächen ist eine solche vorläufige Positionierung nicht sichergestellt, vielmehr ist es zur Montage des Anbauteils erforderlich, dieses vor und während des Festschraubens zugleich festzuhalten, wozu ein weiterer Monteur erforderlich ist, zumindest aber ein beidhändiges Arbeiten.

Daher ist es die Aufgabe der Erfindung, eine vereinfachte Montage ungeachtet der Ausrichtung der zur Montage des Anbauteils vorgesehenen Karosserieaußenfläche zu ermöglichen.

Zur **Lösung** dieser Aufgabe ist eine Vorrichtung mit den eingangs angegebenen Merkmalen gekennzeichnet durch um den Zapfen herum angeordnete Federelemente, deren radiales Maß in ausgefedertem Zustand größer als das entsprechende radiale Maß der Öffnung des Außenblechs ist, wobei an den Federelementen ausgebildete Sperrflächen gegen die Innenseite des Außenblechs gerichtet sind.

Ermöglicht wird hierdurch eine vorläufige Positionierung und Fixierung des Anbauteils an der Fahrzeugkarosserie, und zwar nicht nur im Bereich von im Wesentlichen horizontal ausgerichteten Flächen, sondern auch im Bereich von stark geneigten oder abfallenden Außenflächen. In jeder dieser Lagen wird das Anbauteil ausreichend vorpositioniert.

Das Anbauteil mit dem daran angeordneten Zapfen wird hierzu durch die Öffnung des Außenblechs hindurch gesteckt, bis die Unterseite des Anbauteils zur Anlage an das Außenblech gelangt. Ist dies geschehen, hintergreifen Federelemente nach Art federnder Clips von innen her das Außenblech, so dass das Anbauteil in seiner Montageposition vorfixiert ist, bevor anschließend in einem weiteren Schritt die endgültige Befestigung durch Verschrauben gegen die weiter fahrzeuginnen angeordnete Karosseriestruktur erfolgt. Zur Erzielung des Verclipsens lassen sich die Federelemente aufgrund geringen Drucks radial einfedern. In ausgefedertem Zustand ist ihr radiales Maß größer als das entsprechende radiale Maß der Öffnung in dem Außenblechs, wobei Sperrflächen nach dem Verclipsen unter Federkraft gegen die Innenseite des Außenblechs gerichtet sind, und so die Vorfixierung sicherstellen. Die Federelemente mit den Sperrflächen können soweit radial einfedern, dass sie, wenn sie beim Hindurchführen durch die Öffnung des Karosserieaußenblechs nach innen gedrückt werden, zu dem Zapfen hin zurückweichen. Sie federn selbsttätig nach außen zurück, sobald das Anbauteil auf der Außenseite des Karosserieaußenblechs aufsitzt.

Vorzugsweise handelt es sich bei den Sperrflächen um Schrägen, die federnd gegen die Kante am Übergang zwischen der Innenseite und der Öffnung des Karosserieaußenblechs anliegen.

Mit einer weiteren Ausgestaltung wird vorgeschlagen, dass die Federelemente als Laschen gestaltet sind. Diese können soweit verlängert sein, dass sie sich über die Sperrflächen hinaus und durch die Öffnung hindurch zu dem Anbauteil hin erstrecken.

Hinsichtlich der Herstellung der Befestigungsvorrichtung ist es von Vorteil, wenn die Federelemente bzw. Laschen Bestandteile einer den Zapfen umgebenden Hülse sind. Zu deren Festlegung kann der Zapfen mit einem radialen Vorsprung oder einer Stufe versehen sein, an dem bzw. an der sich die Hülse in Längsrichtung abstützt. In Bezug auf die Hülse wird ferner vorgeschlagen, dass diese einstückig aus mindestens zwei Längsabschnitten besteht, wobei ein Längsabschnitt die durch Längsschlitze unterteilten Federelemente bzw. Laschen aufweist, und die Hülse auf einem weiteren Längsabschnitt einen geschlossenen Umfang aufweist, der der Hülse in diesem Bereich Stabilität verleiht.

Mit einer weiteren Ausgestaltung wird eine elastisch komprimierbare Dichtung zwischen dem Anbauteil und der Außenseite des Karosserieaußenblechs vorgeschlagen. Die Dichtung hat neben Ihrer Dichtfunktion auch eine unterstützende Wirkung hinsichtlich der Vorpositionierung des Anbauteils, da die Wirkung der Federelemente bzw. Laschen unterstützt wird.

Ein Ausführungsbeispiel einer Befestigungsvorrichtung wird im Folgenden anhand der zugehörigen Zeichnungen beschrieben. Darin zeigen:
- Fig. 1: einen Schnitt durch ein zur anschließenden Befestigung an einer Fahrzeugkarosserie vorbereitetes Anbauteil, hier ein Profil;
- Fig. 2: das Anbauteil nach seiner vorläufigen Positionierung an der Fahrzeugkarosserie, und
- Fig. 3: das Anbauteil nach seiner endgültigen Befestigung an der Fahrzeugkarosserie.

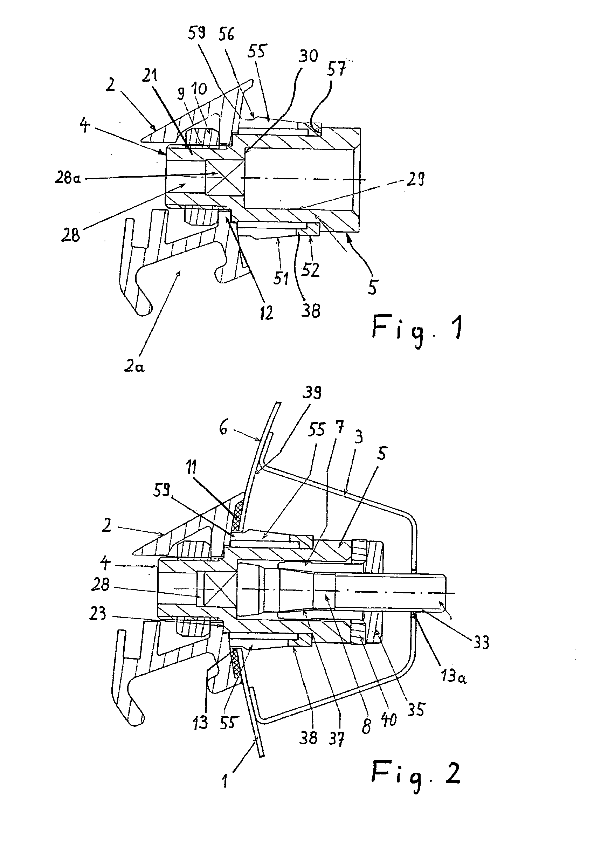

In Fig. 1 ist ein als Profil 2 gestaltetes Anbauteil zur Befestigung außen an einer Fahrzeugkarosserie dargestellt. Derartige Profile werden auch als "Reling" bezeichnet. So stützt sich z. B. eine Dachreling auf der Dachhaut des Fahrzeugdachs ab, wobei sich häufig zwischen der Unterseite des Profils 2 und dem Außenblech 1 eine Dichtung befindet.

Zur Befestigung von z. B. Gepäckträgern, Skiträgern, Fahrradträgern etc. kann das Profil 2 Hinterschneidungen 2a aufweisen, in die Befestigungselemente des jeweiligen Trägersystems, z. B. eines Fahrradträgers oder eines Skiträgers, form- oder reibschlüssig eingreifen, um so das Trägersystem sicher mit dem Fahrzeug zu verbinden.

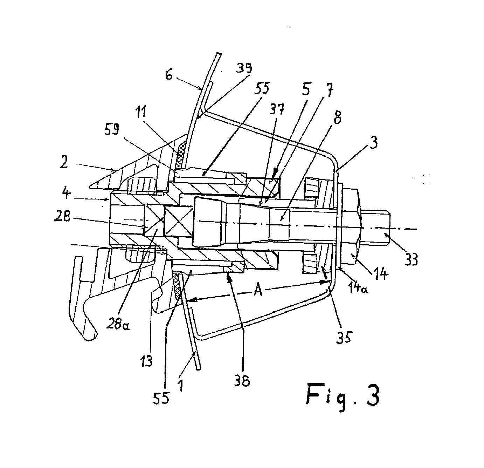

Die Profilbasis 12 ist im Wesentlichen flach gestaltet und mit Öffnungen für im Folgenden noch im Einzelnen beschriebene Befestigungselemente versehen. Falls das Anbauteil ein langgestrecktes Profil ist, können über die Länge dieses Profils betrachtet mehrere Befestigungsanordnungen vorgesehen sein, um so das Profil über dessen gesamte Länge definiert zum Außenblech 1 der Karosserie zu positionieren und daran abzustützen. Zwischen der Profilbasis 12 und der Außenseite 6 des Karosserieaußenblechs 1 kann, wie die Figuren 2 und 3 zeigen, eine elastisch komprimierbare Dichtung 11 angeordnet sein.

Zur Verankerung des Anbauteils 2 an der Fahrzeugkarosserie wird nicht alleine das dünnwandige Außenblech 1 herangezogen, sondern es wird hierzu die erhöhte Steifigkeit einer unterhalb des Außenblechs 1 verlaufenden Karosseriestruktur 3 ausgenutzt. Die Karosseriestruktur 3 ist häufig ein geschweißtes Profil mit entsprechend hoher Festigkeit. Der Abstand A zwischen Außenblech 1 und Karosseriestruktur 3 ist jedoch produktionstechnisch bedingt nicht stets gleich, sondern weist gewisse Schwankungen auf. Daher ist bei der Verankerung des Anbauteils 2 gegenüber der unterhalb angeordneten Karosseriestruktur 3 ein Toleranzausgleich erforderlich. Die im Folgenden beschriebene Anordnung vermag einen solchen Toleranzausgleich auf montagetechnisch einfache Art durchzuführen.

Die in Fig. 2 in einem Zwischenstadium der vorläufigen Positionierung und Fixierung und in Fig. 3 nach Abschluss der Montage dargestellte Befestigungsvorrichtung setzt sich zusammen aus einem in das Anbauteil 2 ragenden Schraubeinsatz 4, einer Mutter 10, einem als Spreizhülse ausgebildeten Klemmelement 7, einem Bolzen 8 sowie einer auf den Bolzen aufschraubbaren, weiteren Mutter 14 mit Unterlegscheibe 14a.

Der erste Teil der Montage wird im Folgenden anhand der Figuren 1 und 2 beschrieben. Der Schraubeinsatz 4 weist in Längsrichtung im Wesentlichen zwei Abschnitte auf, nämlich einen in das Anbauteil 2 hineinragenden Gewindeabschnitt 21 mit einem daran ausgebildeten Außengewinde, sowie einen weiteren Längsabschnitt, welcher einen von dem Anbauteil 2 zu der Karosserie vorstehenden Zapfen 5 bildet. Der Durchmesser des den Zapfen 5 bildenden Längsabschnitts ist gegenüber dem Durchmesser auf dem Gewindeabschnitt 21 erweitert, so dass sich dazwischen eine Stufe 23 befindet.

Bei der Montage an der Fahrzeugkarosserie durchragt der Zapfenabschnitt des Schraubeinsatzes 4 eine in dem Außenblech 1 vorhandene Öffnung 13. Zu dieser Öffnung 13 ist koaxial, d. h. fluchtend, eine weitere Öffnung 13a in der Karosseriestruktur 3 vorhanden.

Eine Mutter 10 steht mit dem Gewindeabschnitt 21 in einer Gewindeverbindung 9. Die Mutter 10 stützt sich mit ihrer Unterseite an der Basis 12 des Profils ab. Wenn der Schraubeinsatz 4 in Bezug auf die Mutter 10 fest angezogen ist, wird der umgebende Bereich der Basis 12 zwischen der Stufe 23 des Schraubeinsatzes 4 und der Unterseite der Mutter 10 eingespannt. Damit die Gewindeverbindung 9 ausreichend fest angezogen werden kann, ist die Mutter 10 gegen Verdrehung gesichert in das Anbauteil 2 eingesetzt. Dies wird erreicht, indem sich der Mehrkant der Mutter 10 gegen eine unmittelbar benachbarte Innenwandung des Anbauteils 2 abstützt, und sich die Mutter 10 daher beim Einschrauben des Schraubeinsatzes 4 nicht zu drehen vermag. Um das Einschrauben und Anziehen des Schraubeinsatzes 4 zu vereinfachen, kann dieser mit Eingriffsflächen zum Ansetzen eines externes Schraubwerkzeug versehen sein.

Bei einer alternativen, auf der Zeichnung nicht dargestellten Variante kann der Schraubeinsatz 4 mit seinem Außengewinde 9 unmittelbar in ein entsprechendes Innengewinde des Anbauteils 2 eingeschraubt werden, etwa in eine aus Guss oder einem anderen Vollmaterial abestehende Relingstütze.

Der Schraubeinsatz 4 weist einen Hohlraum 28 auf, der zumindest auf einer Teillänge als Innenvierkant gestaltet, und der Karosseriestruktur 3 zugewandt zu einer Bohrung 29 erweitert ist. Der Hohlraum 28 mit dem Vierkantabschnitt 28a und die Bohrung 29 fluchten zueinander und bilden gemeinsam eine durchgehende Öffnung, wodurch der Schraubeinsatz 4 insgesamt buchsenförmig gestaltet ist. Alternativ kann der Hohlraum 28 auch an seinem dem Anbauteil zugewandten Ende geschlossen sein. Die Mittelachsen von zylindrischer Bohrung 29 und Hohlraum 28 sind koaxial zur Längsachse von Schraubeinsatz 4 und Zapfen 5. Der Durchmesser der zylindrischen Bohrung 29 ist größer als der Quermesser im Bereich eines Vierkantabschnitts 28a des Hohlraums 28, so dass sich am Übergang von der Bohrung 29 in den Vierkantabschnitt 28a eine Stufe 30 ergibt.

In die zylindrische Bohrung 29 ist das als Spreizhülse ausgebildete Klemmelement 7 eingesetzt. Durch das Klemmelement 7 hindurch führt ein langgestreckter Bolzen 8. Dieser führt in montiertem Zustand mit seinem dem Anbauteil 2 abgewandten Ende durch die Öffnung 13a in der Karosseriestruktur 3 hindurch. Auf diesem Längsbereich ist der Bolzen 8 mit einem Gewinde 33 versehen, auf welches eine Gewindemutter 14 aufschraubbar ist, wobei sich nach Abschluss der Montage, wie in Fig. 3 dargestellt, die Gewindemutter 14 unter Zwischenlage einer Unterlegscheibe 14a von fahrzeuginnen her gegen die stabile Karosseriestruktur 3 abstützt.

Der als Zugelement dienende Bolzen 8 ist in Bezug auf den umgebenden Zapfen 5 axial beweglich, jedoch nicht verdrehbar. Zu diesem Zweck ist der Bolzen 8 an seinem bis in den Vierkantabschnitt 28a hineinreichenden Ende mit einem korrespondierenden Vierkant versehen, wodurch der Bolzen 8 in de Zapfen 5 zwar drehgesichert, jedoch in Längsrichtung beweglich geführt ist. Anstelle dieser Vierkant-Verdrehsicherung können auch anders geformte Verdrehsicherungen realisiert sein, etwa ein Drei- oder Sechskant oder ein Polygon.

Das Klemmelement 7 weist einen buchsen- oder hülsenförmigen Längsabschnitt sowie, bereits außerhalb des Zapfens 5, einen radial erweiterten Flansch 35 auf. Zum Aufspreizen des Klemmelements 7 ist dieses als Spreizhülse mit einzelnen, durch Längsschlitze getrennten Spreizsegmenten gestaltet. Um die für das Aufspreizen erforderliche Aufweitung zu erzielen, weisen die Außenseite des Bolzens 8 sowie die Innenwandung der Spreizhülse 7 jeweils konische Flächen auf. Je nach Bauart ist es auch möglich, einen Konus nur am Umfang des Bolzens 8 oder nur an der Innenseite der Spreizhülse 7 vorzusehen.

Wegen der konischen Gestaltung der Kontaktflächen von Bolzen 8 und Spreizhülse 7 kommt es bei einem Zug auf den Bolzen 8, verbunden mit einer axialen Relativbewegung zwischen Bolzen 8 und Spreizhülse 7, zu einem radialen Aufweiten der Segmente der Spreizhülse 7, wodurch sich diese gegen die Bohrung 29 des Zapfens 5 pressen. Zur Erzielung eines ausreichend großen Toleranzausgleichs ist die Länge der Bohrung 29 größer als die Länge jenes Kontaktabschnitts, auf dem das aufgespreizte Klemmelement 7 gegen die Wandung der Bohrung 29 anliegt.

Die Fig. 2 zeigt ein Zwischenstadium bei der Montage, in welchem die Baueinheit bestehend aus dem Anbauteil 2 mit dem durch den Schraubeinsatz 4 gebildete Zapfen 5, der Spreizhülse 7 sowie dem Bolzen 8 von fahrzeugaußen her durch die Öffnung 13 des Außenblechs 1 hindurchgeschoben wurde, bis sich das Anbauteil 2 unter Zwischenlage der Dichtung 11 gegen die Außenseite 6 des Karosserieaußenblechs abstützt. In diesem Zwischenstadium wird eine vorläufige Positionierung bzw. Fixierung dieser Baueinheit durch Verclipsen erreicht. Zu diesem Zweck gehört zu der Baueinheit ferner eine außen auf dem Zapfen 5 angeordnete Hülse 38, die sich mittels daran ausgebildeter, federnder Elemente 55 spielfrei von innen her gegen das Außenblech 1 abzustützen vermag. Auf diese Weise wird erreicht, dass nach dem Einsetzen der Baueinheit diese zunächst ausreichend am Außenblech 1 fixiert ist wobei diese Fixierung zumindest ausreicht, nach dem Loslassen der Baueinheit deren Herausfallen aus der Öffnung 13 oder auch nur deren Verkanten innerhalb der Öffnung 13 zu verhindern. Die weiteren Montageschritte zur Befestigung des Anbauteils können daher gesondert oder auch nachträglich durchgeführt werden, was den Montageprozess erheblich vereinfacht.

Die Fig. 2 zeigt diesen Zwischenzustand bei der Montage, in welchem die Spreizhülse 7 noch lose in der zylindrischen Bohrung 29 des Schraubeinsatzes 6 sitzt.

Zur Endmontage wird, wie in Fig. 3 wiedergegeben, auf das Gewinde 33 die Gewindemutter 14 mit der Unterlegscheibe 14a aufgesetzt und angezogen. Durch dieses Anziehen werden zunächst der Bolzen 8 und die Spreizhülse 7 gemeinsam nach fahrzeuginnen bewegt, bis der bis dahin noch bestehende Freiraum zwischen der Unterseite des Flansches 35 und der Außenseite der Karosseriestruktur 3 zu null wird. Erst dann führt das weitere Anziehen der Gewindemutter 14 zu einer axialen Relativbewegung zwischen Bolzen 8 und Spreizhülse 7, wodurch letztere sich im Bereich des Konus 37 aufweitet, und reibschlüssig von innen her gegen die Bohrung 29 des Zapfens 5 presst. Bei weiterer Zugkraft auf den Bolzen 8 wird der Zapfen 5 in Richtung der Struktur 3 hin beaufschlagt, d. h. gespannt, wodurch es zu einer dauerhaften Verankerung des Anbauteils 2 gegenüber Außenblech 1 und Karosseriestruktur 3 kommt.

Im vormontierten Zustand, wie in Fig. 2 dargestellt, sind der Bolzen 8 und das Klemmelement 7 - vorläufig - noch mit dem Zapfen 5 des Schraubeinsatzes verbunden. Zu diesem Zweck befindet sich zwischen der Stirnfläche des Zapfens 5 und der Oberseite des Flansches 35 ein doppelseitiges Klebeband 40. Dieses verhindert, dass während der Vormontage nach Fig. 2, d. h. beim Hindurchstecken der Baueinheit durch die Öffnung 13 des Außenblechs, das Klemmelement 7 und der Bolzen 8 aus dem Zapfen 5 herausfallen. Erst durch Anziehen des Bolzens 8 mittels der Gewindemutter 14 löst sich das Klebeband 40, welches dann nicht mehr benötigt wird.

Die das Verclipsen nach der Vorpositionierung übernehmende Hülse 38 setzt sich einstückig aus einem ersten Längsabschnitt 51 und einem zweiten Längsabschnitt 52 zusammen. Der erste Längsabschnitt 51 weist die durch Längsschlitze unterteilten Federelemente 55 auf, die zu dem Zapfen 5 hin radial einfederbar sind. Außenseitig an den Federelementen 55 sind Sperrflächen 56 ausgebildet, die nach der Vorfixierung gegen die Innenseite 39 des Außenblechs 1 gerichtet sind. Für ein symmetrisches Federverhalten sind die durch die Längsschlitze getrennten Federelemente 55 gleichmäßig über den Hülsenumfang verteilt angeordnet. Die Hülse 38 besteht aus einem federelastischen Material und vorzugsweise Kunststoff. Hierdurch wird ein ausreichendes axiales Einfedern der Elemente 55 möglich.

Die Hülse 38 erstreckt sich nur so weit nach fahrzeuginnen, dass sie einen Abstand zur Karosseriestruktur 3 aufweist und sich nicht durch die Öffnung 13a der Karosseriestruktur hindurch erstreckt. Durch die Öffnung 13a hindurch erstreckt sich vielmehr ausschließlich der Bolzen 8.

Von Vorteil kann sein, dass die Sperrflächen 56 der Federelemente 55 als Schrägen gestaltet sind, die sich federnd gegen die Kante im Übergang zwischen der Innenseite 39 und der Öffnung 13 des Außenblechs anliegen. Eine solche Clipverbindung mit schrägen Sperrflächen 56 ist bei ausreichender Zugkraft wieder lösbar, wobei allerdings eine Kraft ausgeübt werden muss, der in jedem Fall größer als das Gesamtgewicht des Anbauteils ist. Ist diese nachträgliche Lösbarkeit unerwünscht, können die Sperrflächen 56 auch rechtwinklig zur Längsachse der Hülse 38 angeordnet sein.

Auf ihrem zweiten Längsabschnitt 52 weist die Hülse 38 einen geschlossenen Umfang auf. Mit diesem zweiten Längsabschnitt 52 stützt sich die Hülse 38 gegen einen radialen Vorsprung bzw. eine Stufe 57 in Längsrichtung ab, die an dem Zapfen 5 angeformt ist.

Die Federelemente sind bei dem Ausführungsbeispiel als in Hülsenlängsrichtung sich erstreckende Laschen 55 gestaltet. Deren radiales Maß im Bereich der Sperrflächen 56 ist in ausgefedertem Zustand größer als das entsprechende radiale Maß der Öffnung 13, wohingegen sich die Laschen 55 soweit zu dem Zapfen hin radial einfedern lassen, dass ihr radiales Maß dann geringer ist, als das entsprechende radiale Maß der Öffnung 13. Beim Aufsetzen der in Fig. 1 dargestellten Baueinheit auf die Karosserie werden daher die Laschen 55 beim Hindurchtreten durch die Öffnung 13 nach innen gedrückt, wodurch sie radial nach innen einfedern, so dass dieses Einführen der Baueinheit mit geringem Widerstand möglich ist. Sobald die Position nach Fig. 2 erreicht ist, weiten sich die Laschen 55 selbsttätig nach außen auf, woraufhin die Sperrflächen 56 die Verriegelung im Kantenbereich der Öffnung 13 bewirken. Hierbei kommt es zu einer Komprimierung der Dichtung 11 mit der Folge eines spielfreien Sitzes des Anbauteils 2 auf dem Außenblech 1. Von Vorteil ist ferner, dass die als Federelemente dienenden Laschen 55 mit Verlängerungen 59 versehen sind, die sich über den Ort der Sperrflächen 56 hinaus durch die Öffnung 13 hindurch in Richtung zu dem Anbauteil 2 hin erstrecken.

Die schräge Anordnung der Sperrflächen 56 bietet den Vorteil, dass es auch nach der Vormontage gemäß Fig. 2 immer noch möglich ist, die gesamte Baueinheit wieder aus der Öffnung 13 nach außen hinauszuziehen, wozu allerdings ein deutlicher Widerstand überwunden werden muss.

### Bezugszeichenliste

- 1: Außenblech
- 2: Anbauteil, Profil
- 2a: Hinterschneidung
- 3: Karosseriestruktur
- 4: Schraubeinsatz
- 5: Zapfen
- 6: Außenseite
- 7: Klemmelement, Spreizhülse
- 8: Bolzen
- 9: Gewindeverbindung
- 10: Mutter
- 11: Dichtung
- 12: Basis
- 13: Öffnung
- 13a: Öffnung
- 14: Gewindemutter
- 14a: Unterlegscheibe
- 21: Gewindeabschnitt
- 23: Stufe
- 28: Hohlraum
- 28a: Vierkantabschnitt
- 29: Bohrung
- 30: Stufe
- 33: Gewinde
- 35: Flansch
- 37: Konus
- 38: Hülse
- 39: Innenseite
- 40: Klebeband
- 51: erster Längsabschnitt
- 52: zweiter Längsabschnitt
- 55: Federelement, Lasche
- 56: Sperrfläche
- 57: Stufe
- 59: Verlängerung

- A: Abstand

## Patentansprüche

1. Vorrichtung zur Befestigung eines sich von außen gegenüber dem Karosserieaußenblech (1) einer Fahrzeugkarosserie abstützenden Anbauteils (2), z. B. einer Reling, an einer im Bereich unterhalb des Karosserieaußenblechs (1) verlaufenden Karosseriestruktur (3), wobei sich ein mit dem Anbauteil (2) verbundener Zapfen (5) durch eine Öffnung (13) des Außenblechs (1) hindurch erstreckt und durch von fahrzeuginnen her gegen die Karosseriestruktur (3) abgestützte Zugmittel (7, 8) zu der Karosseriestruktur (3) hin beaufschlagbar ist,
**gekennzeichnet durch**
um den Zapfen (5) herum angeordnete Federelemente (55), deren radiales Maß in ausgefedertem Zustand größer als das entsprechende radiale Maß der Öffnung (13) des Außenblechs (1) ist, wobei an den Federelementen (55) ausgebildete Sperrflächen (56) gegen die Innenseite (39) des Außenblechs (1) gerichtet sind.

2. Vorrichtung nach Anspruch 1, **dadurch gekennzeichnet, dass** die Sperrflächen (56) Schrägen sind, die federnd gegen die Kante am Übergang zwischen der Innenseite (39) und der Öffnung (13) des Außenblechs (1) anliegen.

3. Vorrichtung nach Anspruch 1 oder 2, **dadurch gekennzeichnet, dass** die Federelemente (55) Laschen sind.

4. Vorrichtung nach Anspruch 3, **dadurch gekennzeichnet, dass** die Laschen soweit verlängert sind, dass sie sich über den Ort der Sperrflächen (56) hinaus durch die Öffnung (13) hindurch zu dem Anbauteil (2) hin erstrecken.

5. Vorrichtung nach Anspruch 4, **dadurch gekennzeichnet, dass** die Verlängerungen (59) freie Enden der Laschen (55) sind.

6. Vorrichtung nach einem der vorangehenden Ansprüche, **dadurch gekennzeichnet, dass** die Federelemente (55) aus einem federelastischen Material bestehen.

7. Vorrichtung nach einem der vorangehenden Ansprüche, **dadurch gekennzeichnet, dass** die Federelemente (55) Bestandteile einer den Zapfen (5) umgebenden Hülse (38) sind.

8. Vorrichtung nach Anspruch 6, **dadurch gekennzeichnet, dass** der Zapfen (5) mit einem radialen Vorsprung oder einer Stufe (57) versehen ist, an dem bzw. an der sich die Hülse (38) in Längsrichtung abstützt.

9. Vorrichtung nach Anspruch 7 oder 8, **dadurch gekennzeichnet, dass** die Hülse (38) einstückig aus mindestens zwei Längsabschnitten (51, 52) besteht, wobei ein erster Längsabschnitt (51) die durch Längsschlitze unterteilten Federelemente (55) aufweist, und die Hülse (38) auf einem zweiten Längsabschnitt (52) einen geschlossenen Umfang aufweist.

10. Vorrichtung nach einem der vorangehenden Ansprüche **dadurch gekennzeichnet, dass** der Zapfen (5) mit einer zumindest zu der Karosseriestruktur (3) hin offenen Bohrung (29) zur Aufnahme eines radial wirkenden Klemmelements (7) versehen ist, wobei das Klemmelement (7) Bestandteil der von fahrzeuginnen her gegen die Karosseriestruktur (3) abgestützten Zugmittel (7, 8) ist.

11. Vorrichtung nach Anspruch 10, **dadurch gekennzeichnet, dass** das radial wirkende Klemmelement (7) als Spreizhülse ausgebildet ist, durch die hindurch sich ein gegenüber dem Zapfen (5) drehgesicherter Bolzen (8) erstreckt, der an seinem durch eine Öffnung (13a) in der Karosseriestruktur (3) hindurchführenden Ende mit einem Gewinde (33) zum Aufschrauben einer von fahrzeuginnen her gegen die Karosseriestruktur (3) abgestützten Gewindemutter (14) versehen ist, wobei das Klemmelement (7) durch eine aus einer Schraubbetätigung der Gewindemutter (14) resultierende Axialverschiebung des Bolzens (8) innerhalb der Bohrung (29) aufspreizbar und radial gegen diese klemmbar ist.

12. Vorrichtung nach einem der vorangehenden Ansprüche, **gekennzeichnet durch** eine elastisch komprimierbare Dichtung (11) zwischen dem Anbauteil (2) und der Außenseite (6) des Außenblechs (1).

13. Vorrichtung nach einem der vorangehenden Ansprüche, **dadurch gekennzeichnet, dass** der Zapfen (5) zur Verbindung mit dem Anbauteil (2) eine Stufe (23) und einen sich durch eine Basis (12) des Anbauteils (2) hindurch erstreckenden Gewindeabschnitt (21) aufweist, der mit einer Mutter (10) derart verschraubt ist, dass die Basis (12) zwischen der Stufe (23) und der Mutter (10) eingespannt ist.

14. Vorrichtung nach einem der vorangehenden Ansprüche, **dadurch gekennzeichnet, dass** die Federelemente (55) auf der fahrzeugaußen gelegenen Seite der Karosseriestruktur (3) angeordnet sind.

## Claims

1. An apparatus for fastening an attachment part (2), for example a rail, supported externally with respect to the outer panel (1) of a vehicle body on a body structure (3) extending in the region below the outer panel (1) of the body, wherein a pin (5) connected to the attachment part (2) extends through an opening (13) in the outer panel (1) and is capable of being acted upon with respect to the body structure (3) by tension means (7, 8) supported against the body structure (3) from the interior of the vehicle, **characterized by**
spring elements (55) which are arranged around the pin (5) and the radial dimension of which in the extended state is greater than the corresponding radial dimension of the opening (13) of the outer panel (1), wherein locking faces (56) formed on the spring elements (55) are directed towards the inner side (39) of the outer panel (1).

2. An apparatus according to Claim 1, **characterized in that** the locking faces (56) are slopes which rest in a springing manner against the edge at the transition between the inner side (39) and the opening (13) in the outer panel (1).

3. An apparatus according to Claim 1 or 2, **characterized in that** the spring elements (55) are fastening plates.

4. An apparatus according to Claim 3, **characterized in that** the fastening plates are lengthened to the extent that they extend beyond the location of the locking faces (56) through the opening (13) to the attachment part (2).

5. An apparatus according to Claim 4, **characterized in that** the lengthened portions (59) are free ends of the fastening plates (55).

6. An apparatus according to any one of the preceding Claims, **characterized in that** the spring elements (55) consist of a spring-resilient material.

7. An apparatus according to any one of the preceding Claims, **characterized in that** the spring elements (55) are component parts of a sleeve (38) surrounding the pin (5).

8. An apparatus according to Claim 6, **characterized in that** the pin (5) is provided with a radial projection or a step (57) on which the sleeve (38) is supported in the longitudinal direction.

9. An apparatus according to Claim 7 or 8, **characterized in that** the sleeve (38) integrally comprises at least two longitudinal portions (51, 52), wherein a first longitudinal portion (51) comprises the spring elements (55) subdivided by longitudinal slots, and the sleeve (38) has a closed periphery on a second longitudinal portion (52).

10. An apparatus according to any one of the preceding Claims, **characterized in that** the pin (5) is provided with a bore (29) open at least towards the body structure (3) for receiving a clamping element (7) acting radially, wherein the clamping element (7) is a component part of the tension means (7, 8) supported against the body structure (3) from the interior of the vehicle.

11. An apparatus according to Claim 10, **characterized in that** the clamping element (7) acting radially is designed in the form of an expansion sleeve through which extends a bolt (8) which is prevented from rotating with respect to the pin (5) and which is provided on its end extending through an opening (13a) in the body structure (3) with a thread (33) for screwing on a threaded nut (14) supported against the body structure (3) from the interior of the vehicle, wherein the clamping element (7) is capable of being expanded by an axial displacement of the bolt (8) resulting from a screw actuation of the threaded nut (14) inside the bore (29) and is capable of being clamped radially against the latter.

12. An apparatus according to any one of the preceding Claims, **characterized by** a seal (11) capable of being resiliently compressed between the attachment part (2) and the outer side (6) of the outer panel (1).

13. An apparatus according to any one of the preceding Claims, **characterized in that** for connection to the attachment part (2) the pin (5) has a step (23) and a threaded portion (21) which extends through a base (12) of the attachment part (2) and which is screwed with a nut (10) in such a way that the base (12) is clamped between the step (23) and the nut (10).

14. An apparatus according to any one of the preceding Claims, **characterized in that** the spring elements (55) are arranged on the side of the body structure (3) situated on the outside of the vehicle.

## Revendications

1. Dispositif pour fixer une partie rapportée (2) s'appuyant par l'extérieur par rapport à la tôle extérieure de carrosserie (1) d_{'}une carrosserie de véhicule, par exemple une rambarde, sur une structure de carrosserie (3) agencée dans la zone située au-dessous de la tôle extérieure de carrosserie (1), sachant qu'un tenon (5) relié à la partie rapportée (2) s'étend à travers une ouverture (13) de la tôle extérieure (1) et peut être sollicité par des moyens de traction (7, 8) soutenus à partir de l'intérieur du véhicule contre la structure de carrosserie (3) en direction de la structure de carrosserie (3),
**caractérisé par**
des éléments de ressort (55) disposés autour du tenon (5), dont la cote radiale est supérieure dans l'état détendu à la cote radiale correspondante de l'ouverture (13) de la tôle extérieure (1), des surfaces de blocage (56) conçues sur les éléments de ressort (55) étant axées vers le côté intérieur (39) de la tôle extérieure (1).

2. Dispositif selon la revendication 1, **caractérisé en ce que** les surfaces de blocage (56) sont des parties inclinées qui s'appliquent de façon élastique contre l'arrête située sur la transition entre le côté intérieur (39) et l'ouverture (13) de la tôle extérieure (1).

3. Dispositif selon la revendication 1 ou 2, **caractérisé en ce que** les éléments de ressort (55) sont des pattes.

4. Dispositif selon la revendication 3, **caractérisé en ce que** les pattes sont prolongées de telle sorte qu'elles s'étendent au-delà de l'emplacement des surfaces de blocage (56) à travers l'ouverture (13) en direction de la partie rapportée (2).

5. Dispositif selon la revendication 4, **caractérisé en ce que** les prolongements (59) sont des extrémités libres des pattes (55).

6. Dispositif selon l'une des revendications précédentes, **caractérisé en ce que** les éléments de ressort (55) sont à base d'un matériau à élasticité de ressort.

7. Dispositif selon l'une des revendications précédentes, **caractérisé en ce que** les éléments de ressort (55) sont des composants d'un manchon (38) entourant le pivot (5).

8. Dispositif selon la revendication 6, **caractérisé en ce que** le pivot (5) est doté d'une saillie radiale ou d'un niveau (57) sur laquelle ou sur lequel s'appuie le manchon (38) dans le sens longitudinal.

9. Dispositif selon la revendication 7 ou 8, **caractérisé en ce que** le manchon (38) est conçu d'une seule pièce à partir d'au moins deux parties longitudinales (51, 52), une première partie longitudinale (51) présentant les éléments de ressort (55) subdivisés par des fentes longitudinales et le manchon (38) présente un pourtour fermé sur une seconde partie longitudinale (52).

10. Dispositif selon l'une des revendications précédentes, **caractérisé en ce que** le pivot (5) est doté d'un alésage (29) ouvert au moins en direction de la structure de carrosserie (3) pour le logement d'un élément de serrage (7) agissant radialement, l'élément de serrage (7) faisant partie des moyens de traction (7, 8) soutenus à partir de l'intérieur du véhicule contre la structure de carrosserie (3).

11. Dispositif selon la revendication 10, **caractérisé en ce que** l'élément de serrage (7) agissant radialement est conçu comme manchon d'écartement, à travers lequel s'étend un boulon (8) bloqué en rotation par rapport au pivot (5), qui est doté sur son extrémité passant à travers une ouverture (13a) dans la structure de carrosserie (3) d'un filetage (33) pour le vissage d'un écrou fileté (14) soutenu à partir de l'intérieur du véhicule contre la structure de carrosserie (3), l'élément de serrage (7) pouvant être bloqué par un déplacement axial, résultant d'un actionnement de vissage de l'écrou fileté (14), du boulon (8) à l'intérieur de l'alésage (29) et pouvant être serré radialement contre celui-ci.

12. Dispositif selon l'une des revendications précédentes, **caractérisé par** un joint (11) comprimable de façon élastique entre la partie rapportée (2) et le côté extérieur (6) de la tôle extérieure (1).

13. Dispositif selon l'une des revendications précédentes, **caractérisé en ce que** le pivot (5) présente pour la liaison avec la partie rapportée (2) un niveau (23) et une partie filetée (21) s'étendant à travers une base (12) de la partie rapportée (2), laquelle partie (21) est vissée avec un écrou (10) de telle sorte que la base (12) est serrée entre le niveau (23) et l'écrou (10).

14. Dispositif selon l'une des revendications précédentes, **caractérisé en ce que** les éléments de ressort (55) sont disposés sur le côté, posé à l'extérieur du véhicule, de la structure de carrosserie (3).
